# EUROPÄISCHE PATENTANMELDUNG

(11) **EP 0 901 118 A2**
(43) Veröffentlichungstag der Anmeldung: **10.03.1999**
(21) Anmeldenummer: 98202843.3
(22) Anmeldetag: 27.08.1998
(51) Int. Cl.: G10L 5/06

(54) **Verfahren und Anordnung zur Berechnung von Abständen in hochdimensionalen Vektorräumen**

(30) Priorität: 05.09.1997 DE 19738846
(71) Anmelder: Philips Patentverwaltung GmbH, 22335 Hamburg (DE); Koninklijke Philips Electronics N.V., 5621 BA Eindhoven (NL)
(72) Erfinder: Rose, Georg, Röntgenstrasse 24, 22335 Hamburg (DE)
(74) Vertreter: Peters, Carl Heinrich, Dipl.-Ing.

(57) **Zusammenfassung**

Bei der Muster- und Spracherkennung spielt die Abstandsberechnug zwischen Merkmalsvektoren eine zentrale Rolle. Für die Berechnung der Abstände zwischen Referenzvektoren (R₁-Rₙ) und neuen Featurevektoren (FV) wird die meiste Rechenzeit benötigt. Durch eine Umorganisation der Komponentenwerte (Wᵢ) der Referenzvektoren (R₁-Rₙ) wird eine Reduzierung der erforderlichen Rechenschritte und damit auch der Rechenzeit bewirkt. Dazu werden in neu gebildeten Wertevektoren (A-M) für jede in allen Referenzvektoren (R₁-Rₙ) vorkommende Komponente K_{A},K_{B}.., nur die unterschiedlichen Werte (Wᵢ) dieser Komponente K_{A},K_{B} .. gespeichert. Bei der dann folgenden Partialabstandsberechnung werden somit die Partialabstände (Pᵢ) zwischen allen Werten (Wᵢ) des jeweils entsprechenden Wertevektors (A-M) und der korrespondierenden Komponente K_{A},K_{B} .. des Featurevektors (FV) nur einmal bestimmt. Den Komponenten K_{A},K_{B} .. der Referenzvektoren (R₁-Rₙ) werden Zeiger (Z_{W}) zugeordnet, die auf die Werte (Wᵢ) in den entsprechenden Wertevektoren (A-M) und damit auf die Partialabstände (Pᵢ) zeigen.

## Beschreibung

Die Erfindung bezieht sich auf ein Verfahren zur Reduzierung der Rechenschritte beim Berechnen von Abständen zwischen Merkmalsvektoren bei der Muster- und Spracherkennung.

Die Abstandsberechnung stellt ein zentrales Problem bei der Muster- und Spracherkennung dar. Sie benötigt die meiste Rechenzeit, so daß eine Reduzierung der Rechenzeit eine erhebliche Verbesserung der Leistungsfähigkeit bewirkt.

In der EP 0 285 211 A2 (DE3710507 A1) wird ein System beschrieben, in dem u.a. Sprachwerte mit Vergleichswerten verglichen werden und Abstandssummen gebildet werden. Diese Vergleichs- und Sprachwerte bestehen aus mehreren Komponenten, die Eigenschaften dieser Signalteile beinhalten. Ein kontinuierliches Sprachsignal wird in eine zeitliche Folge von Sprachwerten eingeteilt, und jede Komponente des Sprachwertes wird mit korrespondierenden Komponenten wenigstens einiger vorgegebener gespeicherter Vergleichswerte verglichen, wobei jedes Vergleichsergebnis einen Abstand darstellt, der zu einer minimalen Abstandssumme addiert wird.

In der DE 42 40 978 A1 wird ein Verfahren zur Verbesserung der Erkennungsqualität bei sprecherabhängiger Spracherkennung beschrieben. Aus einem gesprochenen Wort werden Merkmalsfolgen gebildet, die einem Vektorquantisierungsverfahren unterzogen werden. Dabei werden zuvor für diesen Sprecher erstellte sprechertypische Merkmalsvektoren, die in einem Codebuch abgelegt sind, mit den aktuellen Merkmalsvektoren verglichen. Dazu werden Abstandswerte der Merkmalsvektoren gebildet. Es werden unterschiedliche Abstandsberechnungsmethoden angewendet, deren Ergebnisse ggf. gewichtet und gemittelt werden. Der resultierende Abstandswert wird mit einem Schwellwert verglichen. Dies führt zu einem positiven oder negativen Ergebnis bei der Sprecherverifikation.

In der DE 44 17 557 A1 wird ein Verfahren zur Erkennung von Sprachsignalen und Anordnung zum Durchführen dieses Verfahrens beschrieben. In einer ersten Trainingsphase werden aus anstehenden Referenz-Sprachsignalen erste Merkmalsvektoren gewonnen, die anschließend einer Vektorquantisierung unterzogen werden. Diese Merkmalsvektoren werden mit in einem Codebuch abgespeicherten Clustervektoren verglichen und ein erster Clustervektor ermittelt, der bezüglich eines vorgegebenen Abstandsmaßes die größte Übereinstimmung mit dem jeweiligen Merkmalsvektor aufweist. Die Adresse des ermittelten ersten Clustervektors wird im Adressenspeicher abgespeichert. In der Erkennungsphase werden die zu erkennenden Sprachsignale wieder in Merkmalsvektoren unterteilt und einer Klassifizierung unterzogen und mit den Clustervektoren verglichen. Anhand des Vergleichs wird dasjenige Referenz-Sprachsignal als das zu erkennende Sprachsignal identifiziert, dessen Clustervektoren die bezüglich des Abstandsmaßes größte Übereinstimmung zu den Merkmalsvektoren des zu erkennenden Sprachsignals mit den zweiten Merkmalsvektoren aufweisen. Weisen einzelne Komponenten der Merkmalsvektoren gleiche Werte auf, werden für diese die Abstände mehrmals berechnet.

Es wird in keiner Weise berücksichtigt, daß bei einer großen Anzahl von Vergleichswerten deren Komponenten nur eine bestimmte Anzahl von Werten annehmen können und diese Werte, gerade bei geringer Auflösung, häufiger auftreten. In der Konsequenz bedeutet dies, daß Abstände von Komponentenwerten der Sprachwerte zu Komponentenwerten dieser Vergleichswerte mehrmals berechnet werden. Dadurch geht wertvolle Rechenzeit verloren, so daß diese Systeme kaum echtzeitfähig sind.

Die Aufgabe der Erfindung ist es deshalb, ein Verfahren anzugeben, mit dem der Rechenaufwand bei der Abstandsberechnung optimiert und dadurch auch reduziert werden kann. Diese Aufgabe wird durch das Verfahren nach Anspruch 1 gelöst.

Ein Vorteil dieser Erfindung gegenüber dem Stand der Technik ist das nur einmalige Berechnen aller notwendiger Partialabstände durch die Bildung von Wertevektoren. Die Auflösung der Komponentenwerte ist auf eine bestimmte Bitzahl beschränkt, dadurch treten bei steigender Anzahl unterschiedlicher Referenzvektoren Komponentenwerte mehrfach auf. Zur Verdeutlichung ein Beispiel: Für die Spracherkennung mit großem Wortschatz liegen etwa 60.000 Referenzvektoren mit je 33 Komponenten vor. Bei einer Auflösung von acht Bit sind 256 unterschiedliche Werte für diese Komponenten möglich. Bei 60.000 Referenzvektoren würde sich damit jeder Wert im Schnitt 235 mal wiederholen, bei einer Auflösung von nur vier Bit sogar 3750 mal. Deshalb ist es sinnvoll, bei einem Verhältnis der Anzahl der Referenzvektoren zu der Anzahl der möglichen Komponentenwerten, bei dem sich die Komponentenwerte häufig wiederholen, wie bei dem Beispiel mit einer Auflösung der Komponentenwerte von 8 Bit, diese Wiederholungen zur Optimierung der Rechenzeit einzusetzen.

Da die Bestimmung der Wertevektoren vor einem ersten Erkennungslauf erfolgt, wird Rechenzeit während des Erkennungslaufs eingespart.

In jedem Wertevektor werden nur alle unterschiedlichen Komponenten der in den Referenzvektoren vorkommenden Werte gespeichert. Die Anzahl der zu bildenden Wertevektoren ergibt sich aus der Anzahl der Komponenten der Referenzvektoren, die für alle Referenzvektoren gleich ist, wobei die einzelnen Wertevektoren unterschiedlich viele Komponentenwerte enthalten können. Eine Wiederholung von Werten innerhalb eines Wertevektors ist nicht möglich, jedoch können in unterschiedlichen Wertevektoren auch gleiche Werte auftreten, da die Wertevektoren verschiedene Komponenten der Referenzvektoren repräsentieren und diese Komponenten verschiedene Eigenschaften eines Referenzvektors beschreiben. Die Komponentenwerte in den Wertevektoren sind über Zeiger mit den Werten der Komponenten der Referenzvektoren verknüpft. Jedem Komponentenwert der Referenzvektoren ist ein Zeiger zugeordnet, der auf einen Wert in dem entsprechenden Wertevektor zeigt. Durch die Wiederholungen von Komponentenwerten innerhalb einer Komponente verschiedener Referenzvektoren zeigen auf einen Komponentenwert in den Wertevektoren in der Regel mehrere Zeiger. Die Zeiger, die den Werten der Komponenten der Referenzvektoren zugeordnet werden und die auf die entsprechenden Werte in den Wertevektoren zeigen, bestehen zweckmäßig aus zwei Teilen, wobei der erste Teil auf eine Adresse des entsprechenden Wertevektors zeigt und der zweite Teil einen Offset darstellt, der innerhalb des Wertevektors den entsprechenden Wert auswählt.

Zusätzlich wird für jeden vorkommenden Komponentenwert in den Wertevektoren ein Speicherplatz bereitgehalten, an dem der Partialabstand zu dem Wert der korrespondierenden Komponente des Featurevektors eingetragen wird. Für jede Komponente eines neuen Featurevektors werden Partialabstände berechnet. Hierbei werden die Partialabstände zwischen dem Wert der Komponente des Featurevektors und allen Komponentenwerten in dem der Komponente des Featurevektors entsprechenden Wertevektors berechnet. Dadurch wird für jede Komponente des Featurevektors der Partialabstand zu allen vorkommenden Komponentenwerten, die im entsprechenden Wertevektor gespeichert sind, nur einmal berechnet. Würden die Partialabstände zu allen Komponentenwerten eines jeden Referenzvektors berechnet werden, würden sich aufgrund der Wiederholung von Komponentenwerten in mehreren Referenzvektoren auch Wiederholungen bei der Partialabstandsberechnung ergeben.

Eine weitere Möglichkeit der Reduzierung der Rechenschritte ergibt sich aus einer Clusterung der Werte der Komponenten. Hierbei werden eng benachbarte Werte der Komponenten zu einem Cluster zusammengefaßt. Die Werte innerhalb dieses Clusters müssen eine vorgegebene Bedingung erfüllen. Aus diesen Werten innerhalb des Clusters wird ein Mittelwert berechnet, und die unterschiedlichen Mittelwerte der Komponentenwerte werden in zugehörigen Wertevektoren gespeichert. Durch die Wahl der Bedingung, nach der die Werte den einzelnen Clustern zugeordnet werden, kann die Genauigkeit festgelegt werden. Bei einer groben Bedingung fallen viele Werte in ein Cluster, bei einer engen Bedingung nur wenige. Auch die Breite der Cluster kann mit Hilfe eines Histogramms unterschiedlich festgelegt werden, so daß eine Wichtung von Bereichen möglich ist.

Durch die Menge der Referenzvektoren und die relativ hohe Anzahl der Komponenten unterscheiden sich benachbarte Referenzvektoren häufig in nur wenigen Komponentenwerten, so daß Gruppen von Referenzvektoren gleiche Folgen von Werten in einigen Komponenten aufweisen. Dies bietet eine weitere Möglichkeit zur Optimierung. Falls gleiche Folgen von Komponentenwerten in mehreren benachbarten Referenzvektoren auftreten, werden dazu Partialvektoren neu gebildet, wobei die Zeiger der Komponentenwerte der gleichen Folgen in den Referenzvektoren, die auf Werte in den Wertevektoren zeigen, durch einen vorzugsweise einzigen Zeiger auf den Partialvektor ersetzt werden. In diesem Partialvektor sind Zeiger auf die Werte in den entsprechenden Wertevektoren gespeichert, und darüber wird auf die einzelnen einmal berechneten Partialabstände der zu der betrachteten Folge gehörenden Komponentenwerte zugegriffen, aus diesen Partialabständen wird dann ein Hilfspartialabstand berechnet, der in dem Partialvektor gespeichert wird. Die Anzahl der zur Bestimmung des Abstandes zwischen dem Featurevektor und dem entsprechenden Referenzvektor notwendigen Partialabstände reduziert sich durch diesen Hilfspartialabstand im wesentlichen um die Dimension des Partialvektors, wodurch zusätzlich Rechenzeit gespart wird.

Im folgenden werden Ausführungsbeispiele anhand beiliegender Figuren weiter erläutert.

Es zeigen:
Fig 1 ein Blockschaltbild
Fig.2 eine Darstellung der Bildung von Wertevektoren und deren Verwendung
Fig.3 eine Darstellung der Bildung von Partialvektoren.

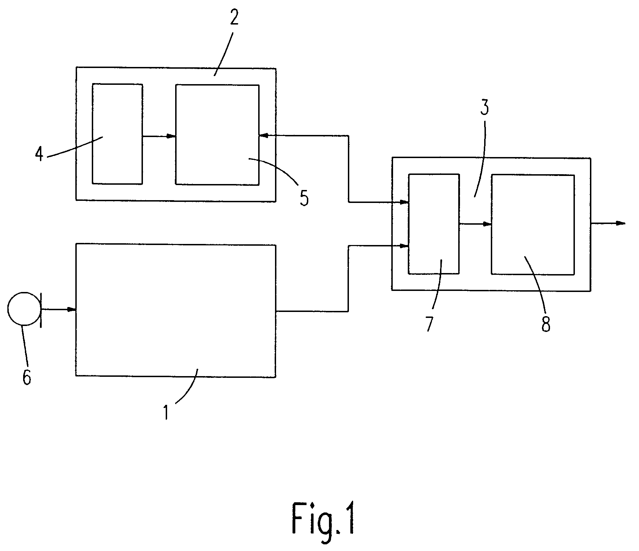

Fig.1 zeigt eine Eingabeeinheit 1, eine Speichereinheit 2 und eine Ausgabeeinheit 3. Der Eingabeeinheit 1 werden die Eingangssignale aus in diesem Beispiel einem Mikrophon 6 zugeführt. Das digitalisierte Signal wird in mehrere, zeitlich aufeinanderfolgende Abschnitte eingeteilt und Werte, die typische Eigenschaften dieser Abschnitte darstellen, werden den entsprechenden Komponenten von Featurevektoren zugeordnet. Der Speicher 2 besteht aus zwei Bereichen. In dem einen Speicherbereich 4 sind Referenzvektoren enthalten, die je aus mehreren Komponenten bestehen, wobei jeder Komponente ein Wert zugeordnet ist. Im anderen Speicherbereich 5 werden die Wertevektoren, die nur unterschiedliche Werte der Komponenten der Referenzvektoren aus dem ersten Speicherbereichs 4 enthalten, gespeichert. Die Ausgabeeinheit 3 enthält die Auswerteeinheit 8 und eine Abstandsberechnung 7, in der jeder Wert der Komponenten eines jeden neu gebildeten Featurevektors mit jedem unterschiedlichen Komponentenwert innerhalb des entsprechenden Wertevektors verglichen, je ein Partialabstand gebildet und dieser dem zugehörigen Wert im Wertevektor zugeordnet wird. Den Komponenten der Referenzvektoren im Speicherbereich 4 werden Zeiger zugewiesen, die auf die unterschiedlichen Komponentenwerte in den Wertevektoren im Speicherbereich 5 mit den entsprechend berechneten Partialabständen zeigen.

Nach der einmaligen Partialabstandsberechnung wird in der Abstandsberechnung 7 für alle Komponenten des Featurevektors für wenigstens einen Teil der Referenzvektoren je eine Kombination der einzelnen Partialabstände der Komponentenwerte eines Referenzvektors nach bestimmten Berechnungsvorschriften gebildet. Diese Kombination stellt den Abstand zwischen dem Featurevektor und dem betreffenden Referenzvektor dar und wird der Auswerteeinheit 8 zur Bildung bzw. Fortsetzung von beispielsweise Worthypothesen zugeführt.

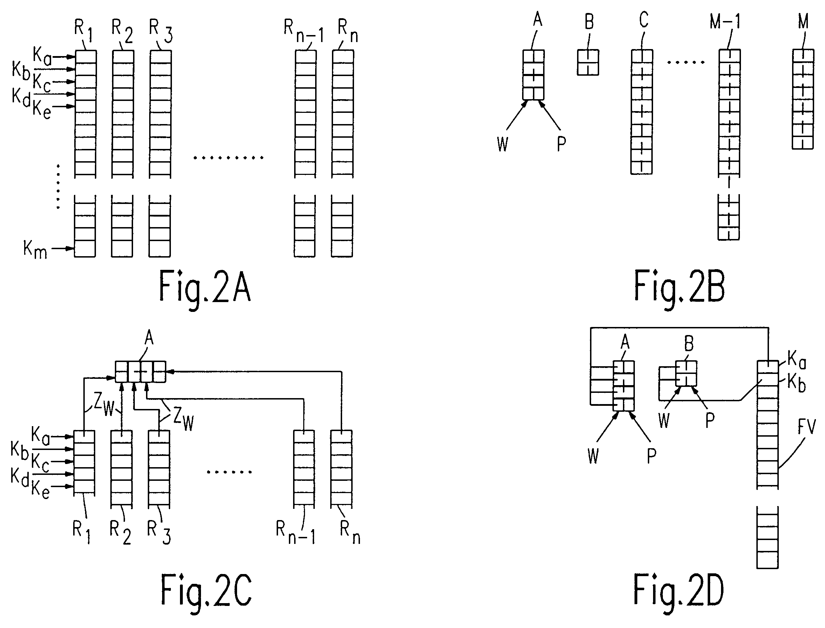

Fig. 2a zeigt die Referenzvektoren R₁-Rₙ mit ihren Komponenten Kₐ-Kₘ. Die Referenzvektoren bestehen alle aus der gleichen Anzahl von Komponenten. In den gespeicherten Werten dieser Komponenten sind Eigenschaften der Signalteile enthalten.

In Fig. 2b sind die Wertevektoren A-M dargestellt. Die Anzahl der Wertevektoren entspricht der Anzahl der Komponenten Kₐ-Kₘ der Referenzvektoren, wobei die Wertevektoren nur noch die unterschiedlichen Werte der Komponenten der Referenzvektoren enthalten. In Wertevektor A sind beispielsweise nur vier Werte dargestellt, d.h. daß in der Komponente Kₐ in den Referenzvektoren R₁-Rₙ nur vier unterschiedliche Werte auftreten. Wertevektor B besteht beispielsweise nur aus zwei Werten, während Wertevektor C hier aus zehn Werten besteht. Diese Werte sind in den Speicherplätzen in den Wertevektoren gespeichert, die mit W bezeichnet sind. Für jeden Wert in diesen Wertevektoren wird zusätzlich ein Speicherplatz P bereitgehalten, an dem der entsprechende Partialabstand gespeichert wird.

Fig. 2c zeigt den Zusammenhang zwischen Referenzvektoren und Wertevektoren am Beispiel des Wertevektors A. Wie oben bereits erwähnt, kommen in der Komponente Kₐ nur vier unterschiedliche Werte vor. Den Werten der Komponente Kₐ der Referenzvektoren R₁-Rₙ sind Zeiger Z_{w} zugeordnet, die auf die entsprechenden Werte in dem Wertevektor zeigen. Die Werte der Komponente Kₐ der Referenzvektoren R₁ und R₂ zeigen auf denselben Wert.

Als weitere Vereinfachung wäre auch ein ausschließliches Speichern der Werte in den Wertevektoren denkbar, so daß die Referenzvektoren nur noch aus Zeigern auf die Werte in den Wertevektoren bestehen.

In Fig. 2d wird die Bildung der Partialabstände verdeutlicht. Ein Featurevektor hat genauso viele Komponenten wie ein Referenzvektor. Der Wert der Komponente Kₐ des Featurevektors wird mit allen Werten des entsprechenden Wertevektors A verglichen und die Differenzen zwischen den Werten in den dafür vorgesehenen Feldern Pᵢ werden als Partialabstände den jeweiligen Werten zugeordnet. Für dieses Beispiel wird also viermal ein Partialabstand berechnet, da in der Komponente Kₐ der Referenzvektoren nur vier unterschiedliche Werte vorkommen. Für die Komponente K_{b} wird nur zweimal eine Partialabstandsberechnung notwendig, da hier nur zwei Werte vorkommen. Wenn die Anzahl der Referenzvektoren wie in obigem Beispiel 60000 ist, muß nicht 60000 mal ein Abstand für jede Komponente eines Featurevektors berechnet werden, sondern in diesem Beispiel für Komponente Kₐ nur viermal oder zweimal für Komponente K_{b}. Diese Beispiele stellen die Problematik etwas überspitzt dar, lassen aber das Ziel eindeutig erkennen. Diese Partialabstandsberechnung zu allen vorhandenen Wertevektoren wird für jeden neuen Featurevektor durchgeführt. Danach wird durch die Zuordnung über die Zeiger Z_{W}, wie in Fig. 2c dargestellt, für jeden Referenzvektor ein Kombinationsabstand gebildet, da jeder Partialabstand dem entsprechenden Wert in den Wertevektoren zugeordnet ist und die Zeiger Z_{W} somit nicht nur auf den Wert ihrer Komponente zeigen, sondern auch auf den Partialabstand. Dieser in der Abstandsberechnung 7 gebildete Abstand für wenigsten einen Teil der Referenzvektoren wird innerhalb der Ausgabeeinheit 3 der Auswerteeinheit 8 zur Bildung und Fortsetzung von beispielsweise Worthypothesen zugeführt. Für die Bildung dieses Abstandes können unterschiedliche Berechnungsmethoden insbesondere nach Gauß, Laplace oder Supremumsnorm angewendet werden.

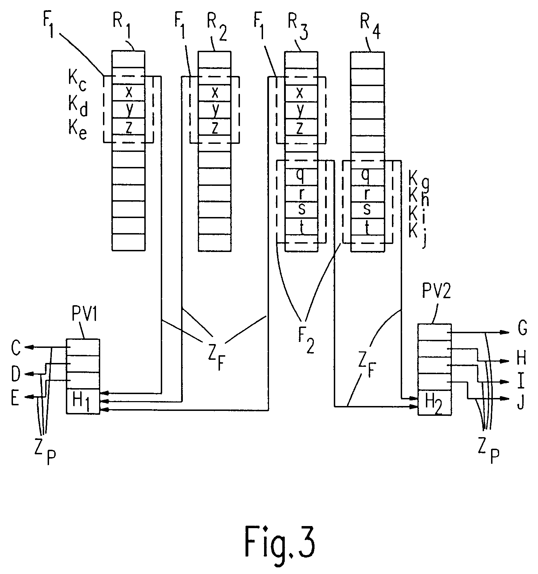

Fig.3 zeigt mehrere Referenzvektoren R₁-Rₙ, die gleiche Folgen F₁ und F₂ von Werten x, y, z bzw. q, r, s, t in den Komponenten K_{c}, K_{d}, Kₑ und K_{g}, Kₕ, Kᵢ, Kⱼ aufweisen. Für diese Folgen F₁ und F₂ werden Partialvektoren PV₁ und PV₂ eingerichtet, um für gleiche Folgen F₁ und F₂ in mehreren Referenzvektoren R₁, R₂, R₃ und R₃, R₄ bei der Abstandsberechnung zwischen Featurevektoren und Referenzvektoren die einzelnen Partialabstände nicht jedesmal neu zu kombinieren. In diesen Partialvektoren PV₁ und PV₂ sind Zeiger Z_{P} auf die Werte in unterschiedlichen Komponenten in den Wertevektoren abgelegt, über die auch ein Zugriff auf die einzelnen berechneten Partialabstände möglich ist. Diese einzelnen Partialabstände der Werte x, y, z und q, r, s, t in den Folgen F₁ und F₂ werden in jeweils einem Hilfsabstand H₁ und H₂ zusammengefaßt. Auch diese beispielsweise dargestellten Partialvektoren PV₁ und PV₂ werden zu Beginn eingerichtet und beanspruchen somit während eines Erkennungslaufs keine Rechenzeit. Die Werte der Komponenten der einzelnen Referenzvektoren ändern sich nicht, so daß beispielsweise R₁, R₂ und R₃ unabhängig vom betrachteten Featurevektor immer die gleiche Folge F₁ mit den Werten x, y, z für die Komponenten K_{c}, K_{d}, Kₑ aufweisen. Der Partialvektor PV₁ wird einmal angesprochen, indem jeweils ein Zeiger Z_{F} pro Folge im Referenzvektor die Zeiger Z_{W} (in Fig,. 2c dargestellt) der Komponenten K_{c}, K_{d}, Kₑ der Folge F₁ in den R₁ ,R₂ und R₃ auf ihre Werte in den Wertevektoren C, D, E ersetzt und dem Partialvektor PV₁ zugeordnet wird. Da die Zeiger Z_{P} der Partialvektoren PV₁ und PV₂ auf die Werte in den einzelnen Wertevektoren C, D, E zeigen, werden die dort einmal berechneten und gespeicherten Partialabstände sofort übernommen und daraus die Hilfspartialabstände H₁ und H₂ berechnet, die dann in dem zugehörigen Partialvektor für die entsprechende Folge gespeichert werden.

Für die Referenzvektoren stellen die Partialvektoren somit Hilfspartialabstände bereit, so daß sich die Zahl der Partialabstände für die Berechnung des Abstands reduziert. In dem gezeigten Beispiel in Fig. 3 sind für R₁ nur zehn Berechnungen statt vorher zwölf notwendig um den Abstand zum Featurevektor zu berechnen. Für den R₃ sind, da hier zwei Folgen vorkommen, nur noch 6 Berechnungen erforderlich. Diese Vorgehensweise ist nur sinnvoll, wenn gleiche Folgen von Werten der gleichen Komponenten auch in mehreren Referenzvektoren auftreten, da sich der Rechenaufwand erst für jeden nächsten Referenzvektor reduziert, da dann der Hilfspartialabstand schon berechnet ist.

Für die Bildung der Wertevektoren ist es auch möglich, bei einem zu großen Wertevorrat der Komponentenwerte der Referenzvektoren diese Werte zu Gruppen oder Clustern zusammenzufassen. Hierzu wird eine entsprechende Bedingung aufgestellt. Inhalt dieser Bedingung ist die Festlegung der Grenzen der Cluster. Je nach geforderter Genauigkeit kann man die Grenzen weit oder eng wählen. Aus allen Werten dieses Clusters wird dann ein Mittelwert mit ebenfalls wählbarer Genauigkeit gebildet. Die so gebildeten Mittelwerte werden in die Wertevektoren eingetragen. Für die Partialabstandsberechnung wird in diesem Fall der gebildete Mittelwert des jeweiligen Clusters herangezogen. Dadurch wird erreicht, daß auch bei einer hohen Auflösung mit entsprechend vielen möglichen Werten das Verfahren der Bildung von Wertevektoren angewendet werden kann. Es bleibt abzuwägen, inwieweit man Abstriche bei der Genauigkeit der Werte in Kauf nehmen kann, ohne damit das Gesamtergebnis, die Erkennung des Musters oder Wortes, nachhaltig zu verfälschen.

## Patentansprüche

1. Verfahren zur Bildung von Wertevektoren (A-M) für die Berechnung von Abständen zwischen einem Featurevektor (FV) und jedem von mehreren Referenzvektoren (R₁-Rₙ) in hochdimensionalen Vektorräumen für die Sprach- und Mustererkennung, wobei für jede in allen Referenzvektoren (R₁-Rₙ) vorkommende Komponente (Kₓ) ein Wertevektor(A-M) gebildet wird, in dem nur vorkommende unterschiedliche Werte (Wᵢ) dieser Komponente (Kₓ) gespeichert werden, wobei jeder Komponente (Kₓ) der Referenzvektoren (R₁-Rₙ) ein Zeiger (Z_{w}) auf den dazugehörigen Wert (Wᵢ) im Wertevektor (A-M) zugeordnet wird.

2. Verfahren zur Berechnung von Abständen zwischen einem Featurevektor (FV) und Referenzvektoren (R₁-Rₙ) unter Verwendung von gemäß Anspruch 1 gebildeten Wertevektoren (A-M), dadurch gekennzeichnet, daß für jede Komponente (Kₓ) eines neuen Featurevektors (FV) zuerst Partialabstände (Pᵢ) zu den unterschiedlichen Werten (Wᵢ) der entsprechenden Komponente (Kₓ) in den Wertevektoren (A-M) gebildet und gespeichert werden und dann für jeden der mehreren Referenzvektoren (R₁-Rₙ) aus den Partialabständen (Pᵢ) aller Komponenten (Kₓ) dieses Referenzvektors (Rₓ) der Abstand zum Featurevektor (FV) gebildet wird.

3. Verfahren nach Anspruch 1, dadurch gekennzeichnet, daß Werte (Wᵢ) der Komponenten (Kₓ) geclustert werden, wobei eng benachbarte Werte, die eine vorgegebene Bedingung erfüllen, zusammengefaßt werden und die unterschiedlichen aus den Werten (Wᵢ) eines Clusters gebildeten Mittelwerte in einem Wertevektor (A-M) pro Komponente (Kₓ) gespeichert werden.

4. Verfahren nach Anspruch 1, dadurch gekennzeichnet, daß die Zeiger (Z_{w}) der Komponenten (Kₓ) jedes Referenzvektors (R₁-Rₙ) auf die Werte (Wᵢ) der Wertevektoren (A-M) aus zwei Teilen bestehen, wobei ein erster Teil eine Adresse des Wertevektors (A-M) für die Komponente (Kₓ) angibt, und ein zweiter Teil einen Offset darstellt, der den Wert (Wᵢ) in den betreffenden Wertevektor (A-M) auswählt.

5. Verfahren nach Anspruch 2, dadurch gekennzeichnet, daß für jede Gruppe von Referenzvektoren (R₁-Rₙ), die für mehrere Komponenten (Kₓ) komponentenweise gleiche Folgen (Fᵢ) von Werten (Wᵢ) enthalten, ein Partialvektor (PV) eingerichtet wird, der Zeiger (Zₚ) auf die Werte (Wᵢ) in den Wertevektoren (A-M) enthält, die in den Gruppen von Referenzvektoren (R₁-Rₙ) komponentenweise gleich sind, wobei jedem Referenzvektor (R₁-Rₙ), der diese Komponenten (Kₓ) enthält, ein einziger Zeiger (Z_{F}) auf den betreffenden Partialvektor (PV) zugeordnet wird, und
daß zur Berechnung der Abstände zwischen Featurevektor (FV) und Referenzvektor (R₁-Rₙ) die Partialabstände (Pᵢ) der Werte (Wᵢ) der Komponenten (Kₓ), auf die ein Zeiger (Z_{P}) aus dem Partialvektor (PV) zeigt, zu einem Hilfspartialabstand (Hₙ) im Partialvektor (PV) zusammengefaßt werden,
wobei zur Berechnung des Abstands zwischen einem Featurevektor (FV) und einem Referenzvektor (R₁-Rₙ) aus einer derartigen Gruppe der Hilfspartialabstand (Hₙ) anstelle der einzelnen Partialabstände (Pᵢ) für die Komponenten (Kₓ) des entsprechenden Partialvektors (PV) verwendet wird.

6. Anordnung zur Berechnung von Abständen zwischen einem Featurevektor (FV) und Referenzvektoren (R₁-Rₙ), mit
einer Eingabeeinheit, in der aus Signalen ein Featurevektor (FV) mit digitalen Werten für vorgegebene Komponenten (Kₓ) gebildet wird,
einer Ausgabeeinheit, die die Abstände der Referenzvektoren (R₁-Rₙ) zu dem Featurevektor (FV) berechnet, und
einem Speicher, in dem Werte (Wᵢ) für die vorgegebenen Komponenten (Kₓ) einer Anzahl Referenzvektoren (R₁-Rₙ) gespeichert sind, dadurch gekennzeichnet, daß jeder Komponente (Kₓ) der Referenzvektoren (R₁-Rₙ) Zeiger (Z_{W}) auf Werte (Wᵢ) in entsprechenden Wertevektoren (A-M) zugeordnet sind, die im Speicher gespeichert sind und in denen alle unterschiedlichen Werte (Wᵢ) aller Referenzvektoren (R₁-Rₙ) enthalten sind, um aus den Komponenten (Kₓ) eines Featurevektors (FV) und den Werten (Wᵢ) aus den Wertevektoren (A-M) Partialabstände (Pᵢ) zu berechnen und daraus Abstände zwischen dem Featurevektor (FV) und mehreren Referenzvektoren (R₁-Rₙ) zu berechnen.
